(19) Europäisches Patentamt
European Patent Office
Office européen des brevets

(11) Veröffentlichungsnummer: **0 020 297**
**B1**

# (12) EUROPÄISCHE PATENTSCHRIFT

(45) Veröffentlichungstag der Patentschrift: **13.04.83**

(51) Int. Cl.³: **C 07 F 9/24**, C 07 F 9/65, C 08 K 5/51 // C10M1/44

(21) Anmeldenummer: **80810158.8**

(22) Anmeldetag: **09.05.80**

## (54) Zyklische Phosphorsäureesteramide, Verfahren zu ihrer Herstellung und ihre Verwendung als Stabilisatoren.

(30) Priorität: **15.05.79 CH 4504/79**

(43) Veröffentlichungstag der Anmeldung: **10.12.80 Patentblatt 80/25**

(45) Bekanntmachung des Hinweises auf die Patenterteilung: **13.04.83 Patentblatt 83/15**

(84) Benannte Vertragsstaaten: **CH DE FR GB LI**

(56) Entgegenhaltungen:
**FR-A-2 354 337**
**SU-A-179 918**
**US-A-3 297 631**
**CHEMICAL ABSTRACTS, Band 82, 1975, Zusammenfassung Nr. 58628v, Seite 41, Columbus, Ohio, US, N. A. MUKMENEVA et al.: »Inhibiting action of some dialkyl(aryl) phosphorous acids«**

(73) Patentinhaber: **CIBA-GEIGY AG, Patentabteilung Postfach, CH-4002 Basel (CH)**

(72) Erfinder: **Rasberger, Michael, Dr., Waltersgrabenweg 6, CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Zyklische Phosphorsäureesteramide, Verfahren zu ihrer Herstellung und ihre Verwendung als Stabilisatoren

Die vorliegende Erfindung betrifft neue N-substituierte 6-Amino-dibenz[d,g][1,3,2]dioxaphosphocine, deren Herstellung, deren Verwendung als Stabilisatoren für organisches Material, sowie das mit deren Hilfe stabilisierte organische Material.

Phosphorigsäure-triester sind als Stabilisatoren bekannt. So sind beispielsweise im US-Patent 3 297 631 substituierte 6-Phenoxy-12H-dibenz[d,g][1,3,2]dioxaphosphocine beschrieben. Diese genügen jedoch nicht in jeder Hinsicht den hohen Anforderungen, die ein Stabilisator erfüllen soll, insbesondere hinsichtlich Lagerstabilität, Wasseraufnahme, Hydrolyseempfindlichkeit, Verarbeitungsstabilisierung, Farbverhalten, Flüchtigkeit, Migrationsverhalten, Verträglichkeit und Lichtschutzverbesserung.

Aufgabe der Erfindung war es, Stabilisatoren bereitzustellen, die diese Nachteile nicht oder in geringerem Maß aufweisen.

Die vorliegende Erfindung betrifft N-substituierte 6-Amino-dibenz[d,g][1,3,2]dioxaphosphocine der Formel I

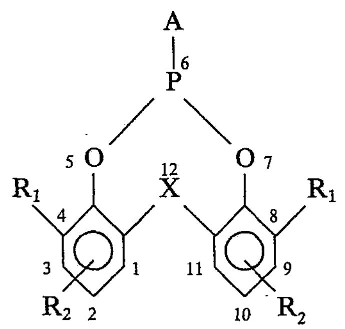

(I)

worin $R_1$ $C_1-C_{18}$ Alkyl, $C_5-C_{12}$ Cycloalkyl, Phenyl oder $C_7-C_9$ Phenylalkyl bedeutet, und $R_2$ Wasserstoff oder $C_1-C_{18}$ Alkyl ist, X Schwefel oder eine Gruppe $-CH(R)_3-$ ist, wobei $R_3$ Wasserstoff oder einen Rest der Formel II $-CH(R_4)-CH(R_5)SR_6$ ist, und $R_4$ und $R_5$ unabhängig voneinander Wasserstoff oder $C_1-C_6$ Alkyl sind und $R_6$ $C_1-C_{20}$ Alkyl bedeutet, wobei die Alkylgruppe gegebenenfalls durch ein oder mehrere Schwefelatome unterbrochen sein kann, und A ein gleichartig oder gemischt substituiertes primäres oder sekundäres aliphatisches oder alicyclisches, aromatisches oder araliphatisches Amin, ein heterocyclisches Amin oder ein Hydrazinderivat bedeutet.

$R_1$ und $R_2$ sind als $C_1-C_{18}$ Alkyl insbesondere geradkettiges oder verzweigtes Alkyl mit 1–8 C-Atomen, z. B. Methyl, Äthyl, n-Propyl, iso-Propyl, sec.-Butyl, t.-Butyl, t.-Pentyl, n-Octyl, 2-Äthylhexyl oder 1,1,3,3-Tetramethylbutyl. $R_1$ ist bevorzugt $\alpha$-verzweigt. In besonders bevorzugten Verbindungen haben $R_1$ und $R_2$ die gleiche Bedeutung, wie t.-Butyl.

Bedeutet $R_1$ $C_5-C_{12}$ Cycloalkyl, so kann es sich im Cyclopentyl, Cycloheptyl, Cyclooctyl, Cyclododecyl, und insbesondere um Cyclohexyl handeln.

$R_1$ ist als $C_7-C_9$ Phenylalkyl z. B. Benzyl, 2-Phenyläthyl oder $\alpha,\alpha$-Dimethylbenzyl.

Die Reste $R_2$ können sich in 1- bzw. 11-Stellung befinden, sind jedoch insbesondere in 2- bzw. 10-Stellung.

X kann Schwefel oder eine Gruppe $-CHR_3$ sein, wobei $R_3$ bevorzugt Wasserstoff ist oder auch eine Gruppe der Formel II bedeutet. $R_4$ und $R_5$ in der Formel II bedeuten als $C_1-C_6$ Alkyl beispielsweise Methyl, Äthyl, i-Propyl, n-Butyl oder n-Hexyl, bevorzugt jedoch Wasserstoff. $R_6$ ist als $C_1-C_{20}$ Alkyl z. B. Methyl, Äthyl, n-Propyl, sec. Butyl, n-Octyl, n-Octadecyl oder n-Eicosyl und kann durch eine oder mehrere Schwefelatome unterbrochen sein. Vorzugsweise befinden sich zwischen zwei Schwefelatomen aber mindestens zwei Kohlenstoffatome. Beispiele sind $-(CH_2)_3-S-(CH_2)_2-CH_3$, $-CH_2CH_2-S-(CH_2)_4-S-CH_2CH_3$ oder $-CH_2CH_2-S-CH_3$.

Die bevorzugte Bedeutung von X ist $-CH_2-$.

A ist ein gleichartig oder gemischt substituiertes primäres oder sekundäres Amin, welches bis zu sechs primäre und/oder sekundäre Aminogruppen enthalten kann. Bevorzugt werden Verbindungen, in welchen alle im Molekül vorkommenden primären oder sekundären Aminstickstoffe mit einer Gruppe der Formel III substituiert sind:

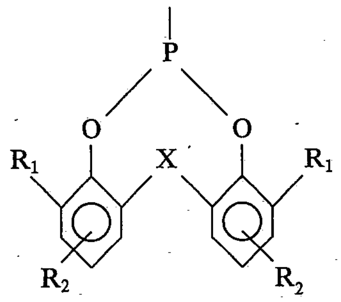

(III)

In der Formel III besitzen die Symbole $R_1$, $R_2$ und X die oben angegebene Bedeutung. Von Interesse sind insbesondere sekundäre Amine, auch vor allem verzweigte Amine. Bevorzugt werden daher Amine A der Formel IV

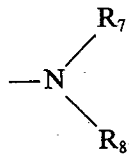

(IV)

worin $R_7$ Wasserstoff, $C_1-C_{22}$ Alkyl, $C_2-C_{21}$ Oxa- oder Thiaalkyl, $C_3-C_{18}$ Alkenyl, $C_3-C_{18}$ Alkinyl, $C_2-C_6$ Hydroxyalkyl, $C_3-C_{24}$ Alkoxycarbonylalkyl, $C_5-C_{12}$ Cycloalkyl, $C_6-C_{14}$ Aryl, $C_7-C_{15}$ Alkaryl, $C_7-C_{15}$ Aralkyl, eine gegebenenfalls substituierte $C_5-C_{17}$ Piperidin-4-ylgruppe oder eine Gruppe der Formel III bedeutet, worin $R_1$, $R_2$ und X die oben angegebene Bedeutung haben und $R_8$ $C_1-C_{22}$ Alkyl, $C_2-C_{21}$ Oxa- oder Thiaalkyl, $C_3-C_{18}$ Alkenyl, $C_3-C_{18}$ Alkinyl, $C_2-C_6$ Hydroxyalkyl, $C_3-C_{24}$ Alkoxycarbonylalkyl, $C_5-C_{12}$ Cycloalkyl, $C_6-C_{14}$ Aryl, $C_7-C_{15}$ Alkaryl, $C_7-C_{15}$ Aralkyl, eine gegebenenfalls substituierte $C_5-C_{17}$ Piperidin-4- oder -1-ylgruppe, eine Gruppe der Formel

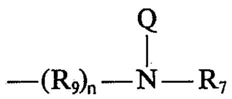

(V)

oder

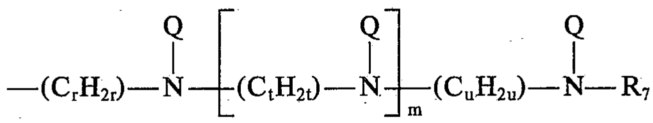

(VI)

worin $R_7$ die oben angegebene Bedeutung hat, und n 0 oder 1 ist, und $R_9$ gegebenenfalls mit einem oder zwei Sauerstoff- oder Schwefelatomen unterbrochenes $C_2$—$C_{22}$ Alkylen, $C_4$—$C_{22}$ Alkenylen, $C_4$—$C_{22}$ Alkinylen, $C_5$—$C_9$ Cycloalkylen, oder eine Gruppe der Formel VII

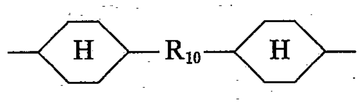

ist, worin $R_{10}$ $-O-$, $-S-$ oder $-(R_{11})C(R_{12})-$ ist, wobei $R_{11}$ und $R_{12}$ unabhängig voneinander Wasserstoff oder $C_1$—$C_8$ Alkyl sind oder $R_{11}$ und $R_{12}$ zusammen mit dem C-Atom, an das sie gebunden sind, $C_5$—$C_{12}$ Cycloalkyl ergeben, oder $R_{11}$ und $R_{12}$ bedeuten zusammen 1,4-Cyclohexylendimethylen oder 1,3,3-Trimethyl-cyclohexylen-1,5; und $R_9$ ferner Phenylen, Biphenylen oder eine Gruppe der Formel VIII

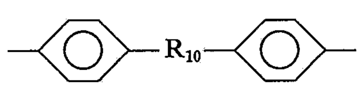

bedeutet, wobei $R_{10}$ die oben angegebene Bedeutung hat, und r, t und u unabhängig voneinander 2, 3, 4, 5 oder 6 sind, und m 0,1 2 oder 3 ist, und Q eine Gruppe der Formel III bedeutet, worin $R_1$, $R_2$ und X die oben angegebene Bedeutung haben, oder $R_7$ und $R_8$ ferner zusammen mit dem N-Atom, an das sie gebunden sind, substituiertes Pyrrolidin, Oxazolidin, Piperidin oder Morpholin bedeuten, oder $R_7$ und $R_8$ zusammen den Rest $-CH_2-CH_2-N(Q)-CH_2-CH_2-$ bilden, worin Q die oben angegebene Bedeutung hat.

Bedeuten $R_7$ und $R_8$ $C_1-C_{22}$ Alkyl, so kann es sich um Methyl, Äthyl, n-Propyl, Isopropyl, N-Butyl, sec.Butyl, tert.Butyl, n-Pentyl, n-Hexyl, Isohexyl, n-Octyl, 1,1,3,3-Tetramethylbutyl, n-Nonyl, Decyl, Dodecyl, Tetradecyl, Hexadecyl, Octadecyl, Eicosyl oder Docosyl handeln. Bevorzugt besitzen $R_7$ und $R_8$ als Alkylgruppen 1—18 C-Atome, und $R_7$ insbesondere 1—12 C-Atome und $R_8$ insbesondere 1—4 C-Atome. $R_7$ und $R_8$ sind als $C_2-C_{21}$, insbesondere $C_4-C_{21}$ Oxa- oder Thiaalkyl bevorzugt Alkoxy- oder Alkylthiopropyl, wie Butoxypropyl, Dodecylthiopropyl, Octyloxypropyl oder Octadecyloxypropyl.

$R_7$ und $R_8$ sind als $C_3-C_{18}$ Alkenyl beispielsweise Allyl, Metallallyl, n-Hex-3-enyl, n-Oct-4-enyl oder n-Undec-10-enyl. Bevorzugt sind Allyl und Methallyl und insbesondere Allyl.

$R_7$ und $R_8$ sind als $C_3-C_{18}$ Alkinyl z. B. Propargyl, n-But-1-inyl, n-But-2-inyl oder n-Hex-1-inyl. Bevorzugt sind Alkinylgruppen mit 3 oder 4 C-Atomen und insbesondere Propargyl.

Bedeuten $R_7$ und $R_8$ Hydroxyalkyl mit 2—6 C-Atomen, so kann es sich dabei um 2-Hydroxypropyl, 2-Hydroxyäthyl, 3-Hydroxypropyl, 4-Hydroxybutyl oder 6-Hydroxyhexyl handeln.

Sind $R_7$ und $R_8$ $C_3-C_{24}$ Alkoxycarbonylalkyl, so kann es sich dabei beispielsweise um Methoxycarbonylmethyl, Äthoxycarbonylmethyl, Methoxycarbonyläthyl, Octoxycarbonylmethyl, Octoxycarbonylbutyl, Dodecyloxycarbonyläthyl oder Octadecyloxycarbonyläthyl handeln.

$R_7$ und $R_8$ sind als $C_5-C_{12}$, bevorzugt $C_5-C_8$ und insbesondere $C_6$ Cycloalkyl beispielsweise Cyclopentyl, Cyclohexyl, Cycloheptyl, Cyclooctyl, Cyclononyl oder Cyclododecyl.

$R_7$ und $R_8$ sind als $C_6-C_{14}$ Aryl z. B. Phenyl, $\alpha$-Naphthyl, $\beta$-Naphthyl oder Phenanthryl. Bevorzugt werden Phenylgruppen.

Bedeuten $R_7$ und $R_8$ Aralkyl mit 7—15 C-Atomen, so handelt es sich z. B. um Benzyl, $\alpha$-Phenyläthyl, $\alpha,\alpha$-Dimethylbenzyl oder um 2-Phenyläthyl, bevorzugt um Benzyl.

$R_7$ und $R_8$ können als $C_7-C_{15}$ Alkarylgruppen beispielsweise Tolyl, 2,6-Dimethylphenyl, 2,6-Diäthylphenyl, 2,4,6-Triisopropylphenyl oder 4-t.Butylphenyl sein.

Bedeutet $R_7$ eine Gruppe der Formel III, so besitzt diese Gruppe bevorzugt die gleiche Substitution wie der bereits im Molekül vorhandene Dibenz[d,g][1,3,2]dioxaphosphocin-6-yl-Rest.

Bilden $R_7$ und $R_8$ mit dem N-Atom an das sie gebunden sind einen Pyrrolidin-, Oxazolidin-, oder Morpholinring, so können diese Heterocyclen mit bis zu fünf Methyl- oder Äthylgruppen substituiert sein. Bevorzugt sind diese Ringsysteme unsubstituiert.

Sind $R_7$ und $R_8$ $C_5-C_{17}$-Piperidin-4-yl-gruppen, so kann es sich dabei beispielsweise um das unsubstituierte Piperidin-4-yl handeln, oder das Piperidin kann mit bis zu 5 Alkylgruppen, bevorzugt mit Methyl- oder Äthyl-gruppen substituiert sein. Bevorzugte Substitutionsstellen sind die 2- und 6-Position im Piperidinring.

$R_7$ und $R_8$ können daher Piperidin-4-yl-gruppen bzw. Piperidin-1-yl-gruppen folgender Konstitution bilden:

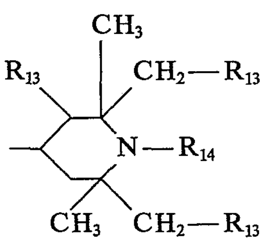 (IX) 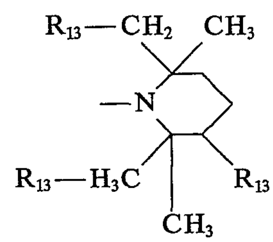 (X)

worin $R_{13}$ Wasserstoff oder Methyl bedeutet, und $R_{14}$ Wasserstoff, Oxyl, $C_1-C_{18}$ Alkyl, $C_3-C_8$ Alkenyl, $C_3-C_6$ Alkinyl, $C_7-C_{12}$ Aralkyl, $C_2-C_{21}$ Alkoxyalkyl, eine aliphatische Acylgruppe mit 1—4 C-Atomen oder eine Gruppe $-CH_2COOR_{15}$, wobei $R_{15}$ $C_1-C_{12}$ Alkyl, $C_3-C_8$ Alkenyl, Phenyl, $C_7-C_8$ Aralkyl oder Cyclohexyl bedeutet.

Ganz besonders bevorzugte Piperidin-4-yl-reste sind solche, worin $R_{13}$ Wasserstoff und $R_{14}$ Wasserstoff, Methyl oder Acetyl bedeutet.

Die bevorzugte Bedeutung von $R_{13}$ ist Wasserstoff.

$R_{14}$ ist als $C_1-C_{18}$ Alkyl z. B. Methyl, Äthyl, n-Propyl, n-Butyl, n-Pentyl, n-Octyl, n-Decyl, n-Dodecyl oder Octadecyl. Bevorzugt sind Alkylgruppen mit 1 bis 12, ferner solche mit 1 bis 8, insbesondere solche mit 1 bis 4 Kohlenstoffatomen und vor allem Methyl.

$R_{14}$ ist als $C_3-C_8$ Alkenyl beispielsweise Allyl, 3-Methyl-2-butenyl, 2-Butenyl, 2-Hexenyl oder 2-Octenyl, insbesondere Allyl.

$R_{14}$ ist als $C_3-C_6$ Alkinyl z. B. Propargyl.

$R_{14}$ ist als $C_7-C_{12}$ Aralkyl z. B. Benzyl, $\beta$-Phenyläthyl oder 4-tert.Butyl-benzyl, bevorzugt Benzyl.

Bedeutet $R_{14}$ $C_2-C_{21}$ Alkoxyalkyl, so kann der Alkylteil 1 bis 3 Kohlenstoffatome enthalten und der Alkoxy-Teil aus 1 bis 18 Kohlenstoffatomen bestehen, wie z. B. in Methoxymethyl, Äthoxymethyl, 2-Methoxyäthyl, 2-Äthoxyäthyl, 2-n-Butoxyäthyl, 3-n-Butoxypropyl, 2-Octoxyäthyl oder 2-Octadecyloxyäthyl; insbesondere zu erwähnen sind Verbindungen, in denen $R_{14}$ eine Alkoxyalkylgruppe mit 2 bis 6 Kohlenstoffatomen bedeutet.

$R_{14}$ ist als aliphatische Acylgruppe mit 1 bis 4 Kohlenstoffatomen, beispielsweise Formyl, Acetyl, Acryloyl oder Crotonoyl, insbesondere Acetyl.

Ist $R_{14}$ die Gruppe $-CH_2COOR_{15}$, so bedeutet $R_{15}$ als $C_1-C_{12}$ Alkyl, z. B. Methyl, Äthyl, Isopropyl, n-Butyl, Isobutyl, t-Butyl, Isopentyl, n-Octyl oder n-Dodecyl. Bevorzugt ist $R_{15}$ $C_1-C_4$ Alkyl. $R_{15}$ ist als $C_3-C_8$ Alkenyl z. B. Allyl, 2-Butenyl oder 2-Hexenyl. $R_{15}$ ist als $C_7-C_8$ Aralkyl z. B. Benzyl oder α-Phenyläthyl.

n kann 0 oder bevorzugt 1 sein.

$R_9$ kann als $C_2-C_{22}$ Alkylen, bevorzugt $C_2-C_9$ und insbesonder $C_2-C_6$ Alkylen beispielsweise Dimethylen, Trimethylen, Tetramethylen, Hexamethylen, Octamethylen, Nonamethylen, 2,2,4-Trimethylhexamethylen, Decamethylen, Dodecamethylen, Octadecamethylen oder Docosamethylen sein. Sind die Alkylengruppen gegebenenfalls mit $-O-$ oser $-S-$ unterbrochen, so kann es sich dabei um 2-Thiapropylen-1,3, 3-Thiapentylen-1,5, 4-Oxaheptamethylen oder 3,6-Dioxaoctylen-1,8 handeln.

Ist $R_9$ $C_4-C_{22}$ Alkenylen oder Alkinylen, so handelt es sich dabei beispielsweise um 2-Butenylen-1,4; 2-Butinylen-1,4; 2,4-Hexadiinylen-1,6 oder um Propenylen-1,3 handeln.

$R_9$ ist als $C_5-C_9$ Cycloalkylen beispielsweise 1,2-Cyclopentylen, 1,2-Cyclohexylen, 1,3-Cyclohexylen, 1,4-Cyclohexylen, 1,4-Cycloheptylen oder 1,2-Cyclononylen. Bevorzugt besitzt $R_9$ als Cycloalkylen 6 C-Atome.

$R_{11}$ und $R_{12}$ sind als $C_1-C_8$ Alkyl z. B. Äthyl, n-Propyl, Isopropyl, n-Butyl, n-Phenyl, n-Hexyl oder n-Octyl, bevorzugt sind $R_{11}$ und $R_{12}$ jedoch als Alkylgruppen Methyl.

$R_{11}$ und $R_{12}$ können ferner mit dem C-Atom, an das sie gebunden sind, $C_5-C_{12}$ Cycloalkyl, bevorzugt Cyclohexyl bilden. Es kann sich dabei um Cyclopentyl, Cyclohexyl, Cycloheptyl, Cyclooptyl oder Cyclododecyl handeln.

r, t und u sind unabhängig voneinander 2, 3, 4, 5 oder 6, bevorzugt sind sie jedoch gleich, und sind insbesondere 2 oder 3.

m kann 0, 1, 2 oder 3 sein. Bevorzugt ist n 0 oder 1 und insbesondere 0.

Kommen in den Verbindungen Reste Q vor, so sind diese bevorzugt gleich substituiert wie die übrigen im Molekül vorkommenden Dibenz[d,g][1,3,2]dioxaphosphocin-6-yl-Reste.

Bevorzugt werden Verbindungen der Formel I, worin $R_1$ und $R_2$ $C_1-C_{18}$ Alkyl sind, und $R_2$ ferner auch Wasserstoff ist, und X Schwefel oder $-CH_2-$ ist, und A eine Gruppe $-N(R_7)R_8$ ist, worin $R_7$ Wasserstoff, $C_1-C_{18}$ Alkyl, $C_3-C_4$ Alkenyl, $C_3-C_4$ Alkinyl, $C_3-C_{24}$ Alkoxycarbonylmethyl oder -äthyl, $C_5-C_{12}$ Cycloalkyl, Phenyl, Benzyl, $C_7-C_{15}$ Alkaryl, eine gegebenenfalls substituierte $C_5-C_{17}$ Piperidin-1- oder 4-yl-gruppe oder eine Gruppe der Formel III bedeutet, worin $R_1$, $R_2$ und X die oben angegebene Bedeutung haben, und $R_8$ $C_1-C_{18}$ Alkyl, $C_3-C_4$ Alkenyl, $C_3-C_4$ Alkinyl, $C_3-C_{24}$ Alkoxycarbonylmethyl oder -äthyl, $C_5-C_{12}$ Cycloalkyl, Phenyl, Benzyl, $C_7-C_{15}$ Alkaryl, eine gegebenenfalls substituierte $C_5-C_{17}$ Piperidin-4- oder -1-yl-gruppe, eine Gruppe der Formel V oder VI ist, worin $R_7$ die oben angegebene Bedeutung hat, und n 0 oder 1 ist, und $R_9$ gegebenenfalls mit einem oder zwei Sauerstoff- oder Schwefelatomen unterbrochenes $C_2-C_9$ Alkylen ist, oder Cyclohexylen, oder eine Gruppe der Formel VII bedeutet, worin $R_{10}$ $-O-$, $-S-$ oder $-(R_{11})C(R_{12})-$ ist, worin $R_{11}$ und $R_{12}$ unabhängig voneinander Wasserstoff oder Methyl sind, oder $R_{11}$ und $R_{12}$ zusammen mit dem C-Atom, an welches sie gebunden sind, Cyclohexylen bilden, oder $R_{11}$ und $R_{12}$ zusammen 1,4-Cyclohexylendimethylen oder 1,3,3-Trimethylcyclohexylen-1,5 bedeuten, und r, t und u 2 oder 3 sind, und m 0 oder 1 ist, und Q eine Gruppe der Formel III ist, worin $R_1$, $R_2$ und X die oben angegebene Bedeutung haben, oder $R_7$ und $R_8$ zusammen mit dem N-Atom an das sie gebunden sind einen Pyrrolidin-, Oxazolidin-, Piperidin- oder Morpholinring bilden, oder $R_7$ und $R_8$ zusammen den Rest $-CH_2CH_2-N(Q)-CH_2CH_2-$ bedeuten, worin Q die oben angegebene Bedeutung hat.

Interesse gilt Verbindungen der Formel I, worin $R_1$ α-verzweigtes $C_3-C_8$ Alkyl, und $R_2$ $C_1-C_8$ Alkyl ist, und X Schwefel oder $-CH_2-$ ist, und A eine Gruppe $-N(R_7)R_8$ (IV) ist, worin $R_7$ Wasserstoff, $C_1-C_{18}$ Alkyl, Allyl, Propargyl, $C_3-C_{14}$ Alkoxycarbonylmethyl, $C_3-C_{15}$ Alkoxycarbonyläthyl oder $C_5-C_8$ Cycloalkyl bedeutet, und $R_8$ $C_1-C_4$ Alkyl, Allyl, Propargyl, $C_3-C_{14}$ Alkoxycarbonylmethyl, $C_3-C_{15}$ Alkoxycarbonyläthyl, $C_5-C_8$ Cycloalkyl oder eine Gruppe der Formel V oder VI bedeutet, worin $R_7$ die oben angegebene Bedeutung hat, und n 1 ist, und $R_9$ $C_2-C_6$ Alkylen bedeutet, und r, t und u 2 oder 3 sind, und m 0 ist, und Q eine Gruppe der Formel III ist, worin $R_1$, $R_2$ und X die oben angegebene Bedeutung haben, oder $R_7$ und $R_8$ zusammen mit dem C-Atom, an welches sie gebunden sind, einen Piperidin- oder Morpholinring bilden, oder $R_7$ und $R_8$ zusammen den Rest $-CH_2CH_2-N(Q)-CH_2CH_2-$ bedeuten, worin Q die oben angegebene Bedeutung hat.

Besonders bevorzugt sind Verbindungen der Formel I, worin $R_1$ und $R_2$ α-verzweigtes $C_3-C_8$ Alkyl bedeuten, und X Schwefel oder $-CH_2-$ ist, und A eine Gruppe $-N(R_7)R_8$ (IV) ist, worin $R_7$ Wasserstoff, $C_1-C_{12}$ Alkyl oder Cyclohexyl ist, und $R_8$ $C_1-C_4$ Alkyl, Cyclohexyl oder eine Gruppe der Formel V ist, worin $R_7$ die oben angegebene Bedeutung hat, und Q eine Gruppe der Formel III ist, worin $R_1$, $R_2$ und X die oben angegebene Bedeutung haben, und n 1 ist, und $R_9$ $C_2-C_6$ Alkylen bedeutet, oder $R_7$ und $R_8$ zusammen mit dem C-Atom, an welches sie gebunden sind, einen Piperidin- oder Morpholinring bilden, oder $R_7$ und $R_8$ zusammen den Rest $-CH_2CH_2-(N(Q)-CH_2CH_2-$ bedeuten, worin Q die oben angegebene Bedeutung hat.

Beispiele für Verbindungen der Formel I sind:

1) 6-(N,N-Di-n-octylamino)-2,4,8,10-tetra-t.butyl-12H-dibenz[d,g][1,3,2]dioxaphosphocin.
2) 6-(2′-Aza-3′,3′,5′-trimethyl-8′-äthoxy-bicyclo[4,4,0]dec-2′-yl)-2,4,8,10-tetra-t.butyl-di-

benz[d,g][1,3,6,2]dioxa-thia-phosphocin.

3) 6-(N-2',6'-Dimethylphenyl-N-cyclohexylamino)-2,10-dimethyl-4,8-di-t.butyl-dibenz[d,g][1,3,6,2]dioxa-thia-phosphocin.

4) 6-(N,N-Dicyclohexylamino)-2,4,8,10-tetra-t.butyl-12H-dibenz[d,g]-[1,3,2]dioxa-phosphocin.

5) 6-(N,N-Dimethylamino)-2,4,8,10-tetra-(1',1',3',3'-tetramethylbutyl)-dibenz[d,g][1,3,6,2]dioxa-thiaphosphocin.

6) 6-Morpholino-2,4,8,10-tetramethyl-12H-dibenz[d,g][1,3,2]dioxaphosphocin.

7) 6-(N,N-Di-n.butylamino)-2,10-dimethyl-4,8-di-t.butyl-12-(2'-dodecylthio-propyl)-12H-dibenz[d,g]-[1,3,2dioxaphosphocin.

8) 6-[N,N-di(hydroxyäthyl)-amino]-2,10-di-(1',1',3',3'-tetramethylbutyl)-dibenz[d,g][1,3,6,2]dioxa-thia-phosphocin.

9) 6-(2',4'-Dimethylanilino)-2,4,8,10-tetra-t.butyl-dibenz[d,g]-[1,3,6,2]dioxa-thia-phosphocin.

10) 6-[p-(Phenylamino)-anilino]-2,10-dimethyl-4,8-di-t.butyl-12H-dibenz[d,g][1,3,2]dioxa-phosphocin.

11) $(Z-CH_2CH_2O)_2N-Z$(*)

12) $(CH_3CH_2-N(Z)-CH_2CH_2)_2-N-Z$(*)

13) $CH_3-(CH_2)_3-CH(C_2H_5)-CH_2-N-(Z)_2$(*).

(*) In den Formeln 11 bis 13 bedeutet Z eine Gruppe der Formel III, worin $R_1$ und $R_2$ t-Butyl bedeuten, und X $-CH_2-$ bedeutet.

Die Phosphite der Formel I können nach an sich bekannten Methoden hergestellt werden, insbesondere durch Amidierungs- oder Umamidierungsverfahren, z. B. dadurch, daß man einen Phosphorigsäurediester der Formel X

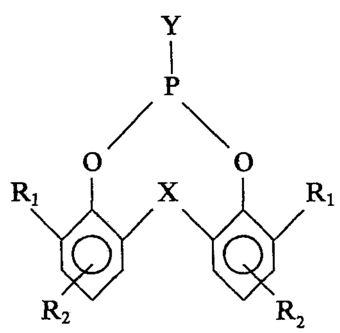

(X)

worin Y eine reaktionsfähige Gruppe ist, und $R_1$, $R_2$ und X die oben angegebene Bedeutung haben, mit einem Amin $R_{16}-A$, insbesondere mit einem Amin der Formel

$$R_{16}N(R_7)R_8 \qquad (XI)$$

worin $R_{16}$ Wasserstoff oder ein Na-, Li- oder K-Atom ist, und A, $R_7$ und $R_8$ die oben angegebene Bedeutung haben, umsetzt.

Eine reaktionsfähige Gruppe Y ist beispielsweise Halogen, insbesondere Chlor, Alkoxy, Phenoxy oder eine primäre oder sekundäre Aminogruppe.

Eine andere Möglichkeit zur Herstellung von Verbindungen der Formel I besteht in der Umsetzung eines Phosphorigsäureamids der Formel

$$(Hal)_2-P-A \qquad (XII)$$

worin Hal ein Halogenatom, insbesondere Chlor bedeutet, und A die oben angegebene Bedeutung hat, mit einem Biphenol der Formel

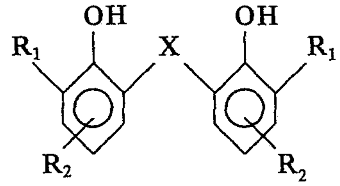

(XIII)

worin $R_1$, $R_2$ und X die oben angegebene Bedeutung haben.

Beide Reaktionstypen können in an sich bekannter Weise erfolgen, z. B. bei $-5°C$ bis $80°C$, oder

durch Erhitzen, bevorzugt auf über etwa 80°C, z. B. 80–170°C. Die Reaktion kann ohne oder in Gegenwart eines inerten Lösungsmittels, wie aprotische Lösungsmittel, z. B. Ligroin, Toluol, Xylol, Hexan, Cyclohexan, Dimethylformamid, Dimethylacetamid, Sulfolan, Acetonitril, Dioxan, Di-n-butyläther, 1,2-Dichloräthan, Dimethylsulfoxid, Essigsäureester, Methyläthylketon, Nitrobenzol, Nitromethan, Tetrahydrofuran, Chloroform oder Trichloräthylen durchgeführt werden. Bedeutet X Halogen, so erfolgt die Reaktion vorteilhaft in Gegenwart einer Base, wie Natriumcarbonat oder einem Amin, z. B. Triäthylamin, Pyridin oder N,N-Dimethylanilin. Es ist aber durchaus möglich, mit einem Überschuß an Amin der Formel XI zu arbeiten, wobei dieser als Säureakzeptor wirkt. Im Überschuß eingesetzte Aminbasen können gleichzeitig als Lösungsmittel dienen.

Die Ausgangsstoffe der Formeln X, XI, XII und XIII sind bekannt, oder können, sofern sie neu sind, in Analogie zu bekannten hergestellt werden. Die Phosphite der Formel X können aus den entsprechenden Biphenol-Verbindungen der Formel XIII und $PY_3$ hergestellt werden, wobei Y die oben angegebene Bedeutung hat. Biphenol-Verbindungen der Formel XIII in welcher –X– eine Gruppe $-CH_2-$ ist, können analog der im US Pat. 4 055 539 beschriebenen Methoden hergestellt werden.

Die Verbindungen der Formel I können gemäß der vorliegenden Erfindung als Stabilisatoren für Kunststoffe und Elastomere gegen deren Schädigung durch Einwirkung von Sauerstoff, Licht und Wärme verwendet werden. Beispiele für solche Kunststoffe sind die in der DE-OS 2 456 864 auf den Seiten 12–14 aufgeführten Polymeren.

Geeignete Substrate sind z. B.:

1. Polymere, die sich von einfach ungesättigten Kohlenwasserstoffen ableiten wie Polyolefine, wie z. B. Polyäthylen, niederer und hoher dichte, das gegebenenfalls vernetzt sein kann, Polypropylen, Polyisobutylen, Polymethylbuten-1, Polymethylpenten-1.
2. Mischungen der unter 1 genannten Homopolymeren, wie z. B. Gemische von Polypropylen und Polyäthylen, Polypropylen und Polybuten-1, Polypropylen und Polyisobutylen.
3. Copolymere der dem unter 1 genannten Hompolymeren zugrundeliegenden Monomeren, wie Äthylen-Propylen-Copolymere, Propylen-Buten-1-Copolymere, Propylen-Isobutylen-Copolymere, Äthylen-Buten-1-Copolymere, sowie Terpolymere von Äthylen und Propylen mit einem Dien, wie z. B. Hexadien, Dicyclopentadien oder Äthylidennorbornen.
4. Polystyrol und seine Copolymeren, wie SAN, ABS, IPS, ASA und EP modifizierte Styrolcopolymerisate.
5. Polyamide.
6. Lineare Polyester.
7. Polyurethane.
8. Polycarbonate.
9. Elastomere, wie Polybutadien, SBR, Polyisopren, Polychloropren und Nitrilkautschuk.
10. Thermoplastische Elastomere, wie SBS, SIS und S-EP-S.
11. Polyvinylchlorid.
12. Schmieröle auf synthetischer und mineralischer Basis.

Ein weiterer Gegenstand vorliegender Erfindung ist ein Verfahren zum Stabilisieren von Polymeren gegen den thermooxidativen Abbau während Herstellung, Isolierung, Verarbeitung und Gebrauch, das dadurch gekennzeichnet ist, daß man dem Polymeren mindestens eine Verbindung der Formel I zusetzt.

Die Verbindungen der Formel I werden den Substraten in einer Konzentration von 0,005 bis 5 Gew.-%, berechnet auf das zu stabilisierende Material, einverleibt.

Vorzugsweise werden 0,01 bis 1,0, besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens einer der Verbindungen der Formel I und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels, erfolgen.

Die neuen Verbindungen können auch in Form eines Masterbatches, der diese Verbindungen beispielsweise in einer Konzentration von 2,5 bis 25 Gew.-% enthält, den zu stabilisierenden Kunststoffen zugesetzt werden.

Im Falle von vernetztem Polyäthylen werden die Verbindungen vor der Vernetzung beigefügt.

Die Erfindung betrifft daher auch die durch Zusatz von 0,01 bis 5 Gew.-% einer Verbindung der Formel I stabilisierten Kunststoffe, die gegebenenfalls noch andere Zusätze enthalten können. Die so stabilisierten Kunststoffe können in verschiedener Form angewendet werden z. B. als Folien, Fasern, Bändchen, Profile oder als Bindemittel für lacke, Klebemittel oder Kitte.

Als Beispiele weiterer Additive, mit denen zusammen die Stabillisatoren eingesetzt werden können, sind zu nennen: Antioxydantien, UV-Absorber und Lichtschutzmittel wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite,

peroxidzerstörende Verbindungen, Polyamidstabilisatoren, basische Co-Stabilisatoren, Nukleierungsmittel oder sonstige Zusätze wie z. B. Weichmacher, Gleitmittel, Emulgatoren, Füllstoffe, Ruß, Asbest, Kaolin, Talk, Glasfasern, Pigmente, optische Aufheller, Flammschutzmittel, Antistatica.

Die Erfindung wird mit den nachfolgenden Beispielen näher erläutert:

## Beispiel

17,9 g 2,2'-Thio-bis-(4-methyl-6-t.butyl-)phenol, 5 ml Phosphortrichlorid sowie 30 ml Xylol werden langsam auf 90–100°C erwärmt. Nach fünfstündiger Reaktionszeit kühlt man das Gemisch auf Raumtemperatur ab, fügt 5,5 g Triäthylamin sowie 4,5 g Piperidin zu und hält das Gemisch für 20 Std. bei Rückfluß-Temperatur. Nach Filtration und Absaugen des Lösungsmittels am Vakuum erhält man

Stabilisator Nr. 1:

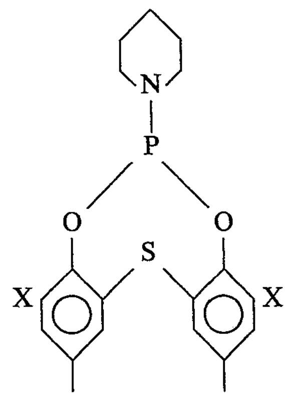

(1)

6-Piperidino-2,10-dimethyl-4,8-di-t.butyl-dibenz[1,3,6,2]dioxa-thiaphosphocin hat einen Schmelzpunkt von 200° C.

Unter somit gleichen Reaktionsbedingungen, jedoch unter Verwendung von Methylen-bis-phenolen erhält man

Stabilisator Nr. 2:
6-Di-n-butylamino-2,4,8,10-tetra-(1',1',3',3'-tetramethylbutyl)-12H-dibenz[d,g][1,3,2]dioxaphosphocin (Fp 113° C)

Stabilisator Nr. 3:
6-Morpholino-2,4,8,10-tetra-(1',1',3',3'-tetramethylbutyl)-12H-dibenz[d,g][1,3,2]dioxaphosphocin (Fp 146° C)

Stabilisator Nr. 4:
6-Morpholino-2,4,8,10-tetra-t.butyl-12H-dibenz[d,g][1,3,2]dioxaphosphocin (Fp 200° C)

Stabilisator Nr. 5:
N,N'-Dimethyl-N,N'-di-(2,4,8,10-tetra-t.butyl-12H-dibenz[d,g][1,3,2]dioxaphosphocin-6-yl)-äthylendiamin (Fp 260° C)

Stabilisator Nr. 6:
6-N,N-Di-n-butylamino-2,4,8,10-tetra-t.butyl-12H-dibenz[d,g][1,3,2]dioxaphosphocin (Fp 100–105° C)

Stabilisator Nr. 7:
6-Morpholino-2,10-dimethyl-4,8-di-t.butyl-12H-dibenz[d,g][1,3,2]dioxaphosphocin (Fp 160° C)

Stabilisator Nr. 8:
6-(2,2,6,6-Tetramethyl-piperidin-1-yl)-2,4,8,10-tetramethyl-12H-dibenz-[d,g][1,3,2]dioxaphosphocin (Fp 198° C)

Stabilisator Nr. 9:
6-N,N-Di-n-butylamino-2,10-dimethyl-4,8-di-t.butyl-12H-dibenz[d,g][1,3,2]dioxaphosphocin (Fp 118–120° C)

Stabilisator Nr. 10:
6-(2,2,6,6-Tetramethyl-piperidin-1-yl)-2,10-dimethyl-4,8-di-t.butyl-12H-dibenz[d,g][1,3,2]dioxaphosphocin (Fp 188° C).

Beispiel 11

100 Teile hochmolekulares Polyäthylen-Pulver (Lupolen 5260Z der Firma BASF) wurden mit 0,05 Teilen Pentaerythrit-tetrakis-[3-(3,5-ditertiärbutyl-4-hydroxyphenyl)-propionat] und den in der untenstehenden Tabelle angegebenen erfindungsgemäßen Verbindungen gemischt und im Brabender Plastographen der Firma bei 220° C bei 50 Umdrehungen pro Minute geknetet. Während dieser Zeit wird der Knetwiderstand als Drehmoment kontinuierlich registriert. Im Verlauf der Knetzeit beginnt das Polymere nach längerer Konstanz zu vernetzen, was anhand der raschen Zunahme des Drehmoments festgestellt werden kann. Die Wirksamkeit der Stabilisatoren äußerst sich in einer Verlängerung der Konstantzeit.

Tabelle I

| Stabilisator | Zeit in Minuten bis sich der Drehmoment ändert |
|---|---|
| 0,1 Teil Verbindung 1 | 15′ |
| 0,1 Teil Verbindung 2 | 9′ |
| 0,1 Teil Verbindung 3 | 9,5′ |
| 0,1 Teil Verbindung 4 | 16,5′ |
| 0,05 Teil Verbindung 4 | 9′ |
| 0,1 Teil Verbindung 6 | 7,0′ |
| 0,1 Teil Verbindung 7 | 14,5′ |
| 0,1 Teil Verbindung 8 | 14,0′ |
| 0,05 Teil Verbindung 8 | 8,0′ |
| 0,1 Teil Verbindung 9 | 11,5′ |

Beispiel 12

100 Teile Polypropylen Pulver (Propathene HF 22 der Firma ICI) werden mit 0,1 Teil Calciumsterat, mit der Verbindung 7 in den in der untenstehenden Tabelle angegebenen Mengen und mit Pentaerythrit-tetrakis-[3-(3,5-ditertiärbutyl-4-hydroxy-phenyl)-propionat) (0,05%) vermischt.

Diese Gemische werden einerseits 5 × hintereinander in einem Einschneckenextruder bei maximal 260° C andererseits 3 × hintereinander im gleichen Extruder bei 280° C extrudiert, in jedem Fall mit 100 Umdrehungen pro Minute. Jeweils nach der 1., 3. und 5., beziehungsweise nach der 1. und 3. Extrusion wird der Schmelzindex des Polymeren, gemessen, wobei die Belastung 2160 g, die Temperatur 230° C und die Meßgröße g/10 Min. ist. Der Abbau des Polymeren äußerst sich in einem Ansteigen des Schmelzindex.

Tabelle 2

| Stabilisator | Schmelzindex nach mehreren Extrusionen | | | | |
|---|---|---|---|---|---|
| | bei 260°C | | | bei 280°C | |
| | 1. | 3. | 5. | 1. | 3. |
| Keiner | 6,3 | 8,9 | 15,0 | 7,1 | 21,4 |
| Mit 0,025 Teilen Verbindung 7 | 4,7 | 6,7 | 9,1 | 6,8 | 14,8 |
| Mit 0,05 Teilen Verbindung 7 | 3,8 | 4,8 | 6,3 | 4,9 | 8,6 |

**Patentansprüche**

1. Verbindungen der Formel I

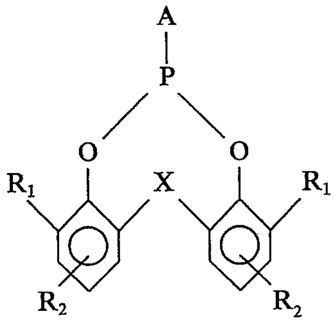

(I)

worin $R_1$ $C_1-C_{18}$ Alkyl, $C_5-C_2$ Cycloalkyl, Phenyl oder $C_7-C_9$ Phenylalkyl bedeutet, und $R_2$ Wasserstoff oder $C_1-C_{18}$ Alkyl ist, X Schwefel oder eine Gruppe $-CH(R)_3-$ ist, wobei $R_3$ Wasserstoff oder einen Rest der Formel II $-CH(R_4)-CH(R_5)SR_6$ ist, und $R_4$ und $R_5$ unabhängig voneinander Wasserstoff oder $C_1-C_6$ Alkyl sind und $R_6$ $C_1-C_{20}$ Alkyl bedeutet, wobei die Alkylgruppe gegebenenfalls durch ein oder mehrere Schwefelatome unterbrochen sein kann, und A ein gleichartig oder gemischt substituiertes primäres oder sekundäres aliphatisches oder alicyclisches, aromatisches oder araliphatisches Amin, ein heterocyclisches Amin oder ein Hydrazinderivat bedeutet.

2. Verbindungen gemäß Anspruch 1 der Formel I, worin A eine Gruppe $-N(R_7)R_8$ (IV) ist, worin $R_7$ Wasserstoff, $C_1-C_{22}$ Alkyl, $C_2-C_{21}$ Oxa- oder Thiaalkyl, $C_3-C_{18}$ Alkenyl, $C_3-C_{18}$ Alkinyl, $C_2-C_6$ Hydroxyalkyl, $C_3-C_{24}$ Alkoxycarbonylalkyl, $C_5-C_{12}$ Cycloalkyl, $C_6-C_{14}$ Aryl, $C_7-C_{15}$ Alkaryl, $C_7-C_{15}$ Aralkyl, eine gegebenenfalls substituierte $C_5-C_{17}$ Piperidin-4- oder -1-ylgruppe oder eine Gruppe der Formel

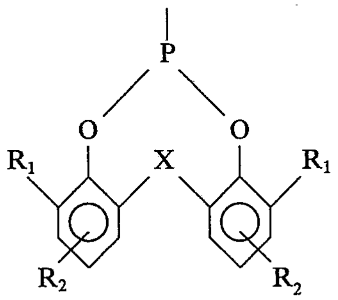

(III)

bedeutet, worin $R_1$, $R_2$ und X die oben angegebene Bedeutung haben und $R_8$ $C_1$—$C_{22}$ Alkyl, $C_2$—$C_{21}$ Oxa- oder Thiaalkyl, $C_3$—$C_{18}$ Alkenyl, $C_3$—$C_{18}$ Alkinyl, $C_2$—$C_6$ Hydroxyalkyl, $C_3$—$C_{24}$ Alkoxycarbonylalkyl, $C_5$—$C_{12}$ Cycloalkyl, $C_6$—$C_{14}$ Aryl, $C_7$—$C_{15}$ Alkaryl, $C_7$—$C_{15}$ Aralkyl, eine gegebenenfalls substituierte $C_5$—$C_{17}$ Piperidin-4- oder -1-ylgruppe, eine Gruppe der Formel

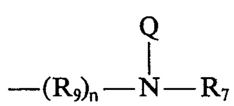

(V)

oder

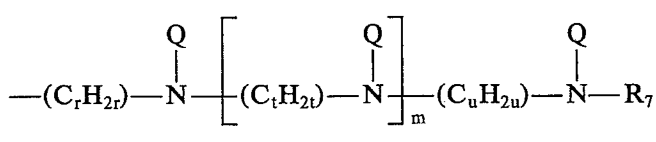

(VI)

worin $R_7$ die oben angegebene Bedeutung hat, und n 0 oder 1 ist, und $R_9$ gegebenenfalls mit einem oder zwei Sauerstoff- oder Schwefelatomen unterbrochenes $C_2$—$C_{22}$ Alkylen, $C_4$—$C_{22}$ Alkenylen, $C_4$—$C_{22}$ Alkinylen, $C_5$—$C_9$ Cycloalkylen, oder eine Gruppe der Formel

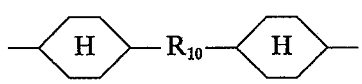

ist, worin $R_{10}$ $-O-$, $-S-$ oder $-(R_{11})C(R_{12})-$ ist, wobei $R_{11}$ und $R_{12}$ unabhängig voneinander Wasserstoff oder $C_1$–$C_8$ Alkyl sind oder $R_{11}$ und $R_{12}$ zusammen mit dem C-Atom, an das sie gebunden sind, $C_5$–$C_{12}$ Cycloalkyl ergeben, oder $R_{11}$ und $R_{12}$ bedeuten zusammen 1,4-Cyclohexylendimethylen oder 1,3,3-Trimethyl-cyclohexylen-1,5; und $R_9$ ferner Phenylen, Biphenylen oder eine Gruppe der Formel VIII

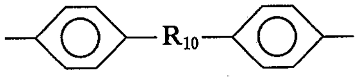

bedeutet, wobei $R_{10}$ die oben angegebene Bedeutung hat, und r, t und u unabhängig voneinander 2, 3, 4, 5 oder 6 sind, und m 0, 1, 2 oder 3 ist, und Q eine Gruppe der Formel III bedeutet, worin $R_1$, $R_2$ und X die oben angegebene Bedeutung haben, oder $R_7$ und $R_8$ ferner zusammen mit dem N-Atom, an das sie gebunden sind, substituiertes Pyrrolidin, Oxazolidin, Piperidin oder Morpholin bedeuten, oder $R_7$ und $R_8$ zusammen den Rest $-CH_2-CH_2-N(Q)-CH_2-CH_2-$ bilden, worin Q die oben angegebene Bedeutung hat.

3. Verbindungen gemäß Anspruch 1 der Formel I, worin $R_1$ und $R_2$ $C_1-C_{18}$ Alkyl sind, und $R_2$ ferner auch Wasserstoff ist, und X Schwefel oder $-CH_2-$ ist, und A eine Gruppe $-N(R_7)R_8$ ist, worin $R_7$ Wasserstoff, $C_1-C_{18}$ Alkyl, $C_3-C_4$ Alkenyl, $C_3-C_4$ Alkinyl, Methoxycarbonylmethyl oder -äthyl, $C_5-C_{12}$ Cycloalkyl, Phenyl, Benzyl, $C_7-C_{15}$ Alkaryl, eine gegebenenfalls substituierte $C_5-C_{17}$ Piperidin-4- oder -1-yl-gruppe oder eine Gruppe der Formel III bedeutet, worin $R_1$, $R_2$ und X die oben angegebene Bedeutung haben, und $R_8$ $C_1-C_{18}$ Alkyl, $C_3-C_4$ Alkenyl, $C_3-C_4$ Alkinyl, Methoxycarbonylmethyl oder -äthyl, $C_5-C_{12}$ Cycloalkyl, Phenyl, Benzyl, $C_7-C_{15}$ Alkaryl, eine gegebenenfalls substituierte $C_5-C_{17}$ Piperidin-4- oder -1-yl-gruppe, eine Gruppe der Formel V oder VI ist, worin $R_7$ die oben angegebene Bedeutung hat, und n 0 oder 1 ist, und $R_9$ gegebenenfalls mit einem oder zwei Sauerstoff- oder Schwefelatomen unterbrochenes $C_2-C_9$ Alkylen ist, oder Cyclohexylen, oder eine Gruppe der Formel VII bedeutet, worin $R_{10}$ $-O$, $-S-$ oder $-(R_{11})C(R_{12})-$ ist, worin $R_{11}$ und $R_{12}$ unabhängig voneinander Wasserstoff oder Methyl sind, oder $R_{11}$ und $R_{12}$ zusammen mit dem C-Atom, an welches sie gebunden sind, Cyclohexylen bilden, oder $R_{11}$ und $R_{12}$ zusammen 1,4-Cyclohexylendimethylen oder 1,3,3-Trimethylcyclohexylen-1,5 bedeuten, und r, t und u 2 oder 3 sind, und m 0 oder 1 ist, und Q eine Gruppe der formel III ist, worin $R_1$, $R_2$ und X die oben angegebene Bedeutung haben, oder $R_7$ und $R_8$ zusammen mit dem N-Atom an das sie gebunden sind einen Pyrrolidin-, Oxazolidin-, Piperidin- oder Morpholinring bilden, oder $R_7$ und $R_8$ zusammen den Rest $-CH_2CH_2-N(Q)-CH_2CH_2-$ bedeuten, worin Q die oben angegebene Bedeutung hat.

4. Verbindungen gemäß Anspruch 1 der Formel I, worin $R_1$ $\alpha$-verzweigtes $C_3-C_8$ Alkyl, und $R_2$ $C_1-C_8$ Alkyl ist, und X Schwefel oder $-CH_2-$ ist, und A eine Gruppe $-N(R_7)\,R_8$ (IV) ist, worin $R_7$ Wasserstoff, $C_1-C_{18}$ Alkyl, Allyl, Propargyl, Methoxycarbonylmethyl, Methoxycarbonyläthyl oder $C_5-C_8$ Cycloalkyl bedeutet, und $R_8$ $C_1-C_4$ Alkyl, Allyl, Propargyl, Methoxycarbonylmethyl, Methoxycarbonyläthyl, $C_5-C_8$ Cycloalkyl oder eine Gruppe der Formel V oder VI bedeutet, worin $R_7$ die oben angegebene Bedeutung hat, und n 1 ist, und $R_9$ $C_2-C_6$ Alkylen bedeutet, und r, t und u 2 oder 3 sind, und m 0 ist, und Q eine Gruppe der Formel III ist, worin $R_1$, $R_2$ und X die oben angebene Bedeutung haben, oder $R_7$ und $R_8$ zusammen mit dem C-Atom, an welches sie gebunden sind, einen Piperidin- oder Morpholinring bilden, oder $R_7$ und $R_8$ zusammen den Rest $-CH_2CH_2-N(Q)-CH_2CH_2-$ bedeuten, worin Q die oben angegebene Bedeutung hat.

5. Verbindungen gemäß Anspruch 1 der Formel I, worin $R_1$ und $R_2$ $\alpha$-verzweigtes $C_3-C_8$ Alkyl bedeuten, und A eine Gruppe $-N(R_7)R_8$ (IV) ist, worin $R_7$ Wasserstoff, $C_1-C_{12}$ Alkyl oder Cyclohexyl ist, und $R_8$ $C_1-C_4$ Alkyl, Cyclohexyl oder eine Gruppe der Formel V ist, worin $R_7$ die oben angegebene Bedeutung hat, und Q eine Gruppe der Formel III ist, worin $R_1$, $R_2$ und X die oben angegebene Bedeutung haben, und n 1 ist, und $R_9$ $C_2-C_6$ Alkylen bedeutet, oder $R_7$ und $R_8$ zusammen mit dem C-Atom, an welches sie gebunden sind, einen Piperidin- oder Morpholinring bilden, oder $R_7$ und $R_8$ zusammen den Rest $-CH_2CH_2-N(Q)-CH_2CH_2-$ bedeuten, worin Q die oben angegebene Bedeutung hat.

6. Verbindungen gemäß Anspruch 1 der Formel I, worin A $-N(R_7)R_8$ ist, wobei $R_7$ eine Piperidin-4- oder -1-yl-gruppe der Formel

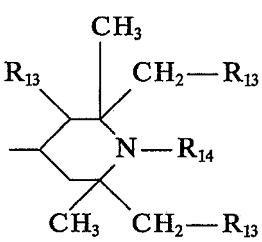 (IX) oder 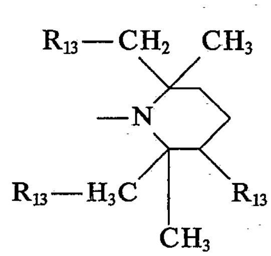 (X)

worin $R_{13}$ Wasserstoff oder Methyl bedeutet, und $R_{14}$ Wasserstoff, Oxyl, $C_1-C_{18}$ Alkyl, $C_3-C_8$ Alkenyl, $C_3-C_6$ Alkinyl, $C_7-C_{12}$ Aralkyl, $C_2-C_{21}$ Alkoxyalkyl, eine aliphatische Acylgruppe mit 1–4 C-Atomen oder eine Gruppe $-CH_2COOR_{15}$, wobei $R_{15}$ $C_1-C_{12}$ Alkyl, $C_3-C_8$ Alkenyl, Phenyl, $C_7-C_8$ Aralkyl oder Cyclohexyl bedeutet, und $R_8$ die in Anspruch 2 angegebene Bedeutung hat und die übrigen Symbole die in Anspruch 1 angegebene Bedeutung haben.

7. Verbindungen gemäß Anspruch 1 der Formel I, worin A $-N(R_7)R_8$ ist, wobei $R_7$ und $R_8$ je eine Gruppe der Formel IX bedeuten, worin $R_{13}$ und $R_{14}$ die in Anspruch 6 angegebene Bedeutung haben und die übrigen Symbole die in Anspruch 1 angegebene Bedeutung haben.

8. Verbindungen gemäß Anspruch 6, wobei in den Resten der Formel IX $R_{13}$ Wasserstoff und $R_{14}$ Wasserstoff, $C_1-C_8$ Alkyl, Allyl, Benzyl oder Acetyl ist.

9. Verbindungen gemäß Anspruch 8, wobei $R_{13}$ Wasserstoff und $R_{14}$ Wasserstoff, Methyl oder Acetyl ist.

10. Verbindungen gemäß Anspruch 1 der Formel I, worin $R_1$ und $R_2$ t.-Butyl oder 1,1,3,3-Tetramethylbutyl sind und A die angegebene Bedeutung hat.

11. Verfahren zur Herstellung von Verbindungen der Formel I gemäß Anspruch 1, dadurch gekennzeichnet, daß man einen Phosphorigsäurediester der Formel

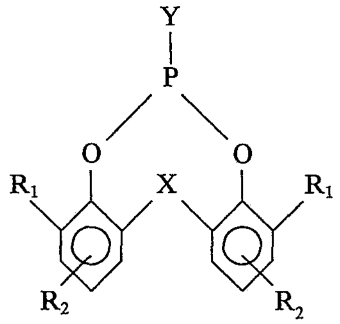

(X)

worin Y eine reaktionsfähige Gruppe ist und $R_1$, $R_2$ und X die oben angegebene Bedeutung haben, mit einem Amin $R_{16}A$, insbesondere mit einem Amin der Formel

$$R_{16}N(R_7)R_8 \quad (XI)$$

worin $R_{16}$ Wasserstoff oder ein Na-, Li- oder K-Atom ist, und A, $R_7$ und $R_8$ die oben angegebene Bedeutung haben, umsetzt, oder ein Phosphorigsäureamid der Formel

$$(Hal)_2-P-A \quad (XII)$$

worin Hal ein Halogenatom, insbesondere Chlor bedeutet, und A die angegebene Bedeutung hat, mit einem Biphenol der Formel

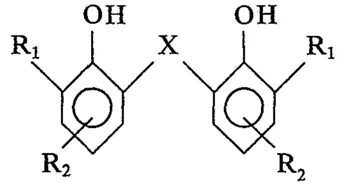

(XIII)

worin $R_1$, $R_2$ und X die oben angegebene Bedeutung haben, umsetzt.

12. Verbindung gemäß Anspruch 1, 6-Morpholino-2,4,8,10-tetra-t.butyl-12H-dibenz[d,g][1,3,2]dioxaphosphocin.

## Claims

1. A compound of the formula I

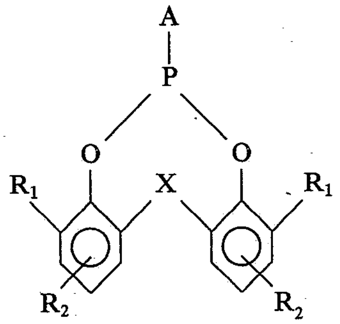

(I)

wherein $R_1$ is $C_1-C_{18}$ alkyl, $C_5-C_{12}$ cycloalkyl, phenyl or $C_7-C_9$ phenylalkyl and $R_2$ is hydrogen or $C_1-C_{18}$ alkyl, and X is sulfur or a group $-CH(R_3)-$, in which $R_3$ is hydrogen or a radical of the formula II $-CH(R_4)-CH(R_5)SR_6$, and each of $R_4$ and $R_5$ independently is hydrogen or $C_1-C_6$ alkyl and $R_6$ is $C_1-C_{20}$ alkyl, while the alkyl group can be interrupted by one or more sulfur atoms, and A is a primary or secondary aliphatic or alicyclic, aromatic or araliphatic amine which contains substituents of the same type or mixed substituents, or a heterocyclic amine or a hydrazine derivative.

2. A compound according to claim 1 of the formula I, wherein A is a group $-N(R_7)R_8$ (IV), in which $R_7$ is hydrogen, $C_1-C_{22}$ alkyl, $C_2-C_{21}$ oxa- or thiaalkyl, $C_3-C_{18}$ alkenyl, $C_3-C_{18}$ alkynyl, $C_2-C_6$ hydroxyalkyl, $C_3-C_{24}$ alkoxycarbonylalkyl, $C_5-C_{12}$ cycloalkyl, $C_6-C_{14}$ aryl, $C_7-C_{15}$ alkaryl, $C_7-C_{15}$ aralkyl, a substituted or unsubstituted $C_5-C_{17}$ piperidin-4- or -1- l group or a group of the formula

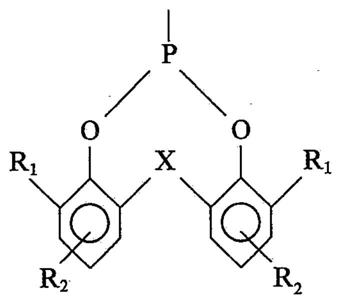

(III)

in which $R_1$, $R_2$ and X are as defined above, and $R_8$ is $C_1-C_{22}$ alkyl, $C_2-C_{21}$ oxa-or thiaalkyl, $C_3-C_{18}$ alkenyl, $C_3-C_{18}$ alkynyl, $C_2-C_6$ hydroxyalkyl, $C_3-C_{24}$ alkoxycarbonylalkyl, $C_5-C_{12}$ cycloalkyl, $C_6-C_{14}$ aryl, $C_7-C_{15}$ alkaryl, $C_7-C_{15}$ aralkyl, a substituted or unsubstituted $C_5-C_{17}$ piperidin-4-yl group or a group of the formula

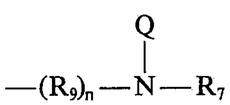

(V)

or

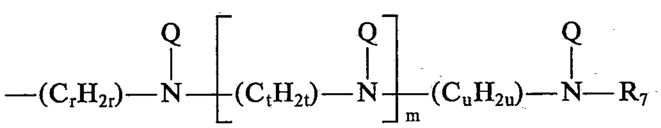

(VI)

in which $R_7$ is as defined above and n is 0 or 1, and $R_9$ is $C_2-C_{22}$ alkylene which can be interrupted by one or two oxygen or sulfur atoms, or is $C_4-C_{22}$ alkenylene, $C_4-C_{22}$ alkynylene, $C_5-C_9$ cycloalkylene or a group of the formula VII

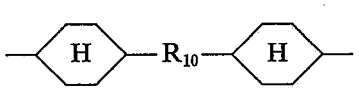

in which $R_{10}$ is $-O-$, $-S-$ or $-(R_{11})C(R_{12})-$, in which each of $R_{11}$ and $R_{12}$ independently is hydrogen or $C_1-C_8$ alkyl, or $R_{11}$ and $R_{12}$ together with the carbon atom to which they are attached form $C_5-C_{12}$ cycloalkyl, or $R_{11}$ and $R_{12}$ together are 1,4-cyclohexylenedimethylene or 1,3,3-trimethyl-1,5-

cyclohexylene; and $R_9$ is also phenylene, biphenylene or a group of the formula VIII

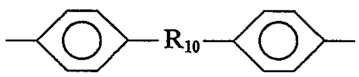

in which $R_{10}$ is as defined above, and each of r, t and u independently is 2, 3, 4, 5 or 6 and m is 0, 1, 2 or 3, and Q is a group of the formula III, in which $R_1$, $R_2$ and X are as defined above, or $R_7$ and $R_8$ together with the nitrogen atom to which they are attached are also substituted pyrrolidine, oxazolidine, piperidine or morpholine, or $R_7$ and $R_8$ together form the radical $-CH_2-CH_2-N(Q)-CH_2-CH_2-$, in which Q is as defined above.

3. A compound to claim 1 of the formula I, wherein $R_1$ and $R_2$ are $C_1-C_{18}$ alkyl, and $R_2$ is also hydrogen, and X is sulfur or $-CH_2-$ and A is a group $-N(R_7)R_8$, in which $R_7$ is hydrogen, $C_1-C_{18}$ alkyl, $C_3-C_4$ alkenyl, $C_3-C_4$ alkynyl, methoxycarbonylmethyl or methoxycarbonylethyl, $C_5-C_{12}$ cycloalkyl, phenyl, benzyl, $C_7-C_{15}$ alkaryl, a substituted or unsubstituted $C_5-C_{17}$ piperidin-4- or -1-yl group or a group of the formula III, in which $R_1$, $R_2$ and X are as defined above, and $R_8$ is $C_1-C_{18}$ alkyl, $C_3-C_4$ alkenyl, $C_3-C_4$ alkynyl, methoxycarbonylmethyl or methoxycarbonylethyl, $C_5-C_{12}$ cycloalkyl, phenyl, benzyl, $C_7-C_{15}$ alkaryl, a substituted or unsubstituted $C_5-C_{17}$ piperidin-4-yl group or a group of the formula V or VI, in which $R_7$ is as defined above and n is 0 or 1 and $R_9$ is $C_2-C_9$ alkylene which can be interrupted by one or two oxygen or sulfur atoms, or is cyclohexylene or a group of the formula VIII, in which $R_{10}$ is $-O-$, $-S-$ or $-(R_{11})C(R_{12})-$, in which each of $R_{11}$ and $R_{12}$ independently is hydrogen or methyl, or $R_{11}$ and $R_{12}$ together with the carbon atom to which they are attached form cyclohexylene, or $R_{11}$ and $R_{12}$ together are 1,4-cyclohexylenedimethylene or 1,3,3-trimethyl-1,5-cyclohexylene, and r, t and u are 2 or 3 and m is 0 or 1 and Q is a group of the formula III, in which $R_1$, $R_2$ and X are as defined above, or $R_7$ and $R_8$ together with the nitrogen atom to which they are attached form a pyrrolidine, oxazolidine, piperidine or morpholine ring, or $R_7$ and $R_8$ together are the radical $-CH_2CH_2-N(Q)-CH_2CH_2-$, in which Q is as defined above.

4. A compound according to claim 1 of the formula I, wherein $R_1$ is $\alpha$-branched $C_3-C_8$ alkyl and $R_2$ is $C_1-C_8$ alkyl and X is sulfur or $-CH_2-$ and A is a group $-N(R_7)R_8$ (IV), in which $R_7$ is hydrogen, $C_1-C_{18}$ alkyl, allyl, propargyl, methoxycarbonylmethyl, methoxycarbonylethyl or $C_5-C_8$ cycloalkyl and $R_8$ is $C_1-C_4$ alkyl, allyl, propargyl, methoxycarbonylmethyl, methoxycarbonylethyl, $C_5-C_8$ cycloalkyl or a group of the formula V or VI, in which $R_7$ is as defined above and n is 1 and $R_9$ is $C_2-C_6$ alkylene and r, t and u are 2 or 3 and m is 0 and Q is a group of the formula III, in which $R_1$, $R_2$ and X are as defined above, or $R_7$ and $R_8$ together with the carbon atom to which they are attached form a piperidine or morpholine ring, or $R_7$ and $R_8$ together are the radical $-CH_2CH_2-N(Q)-CH_2CH_2-$ in which Q is as defined above.

5. A compound according to claim 1 of the formula I, in which $R_1$ and $R_2$ are $\alpha$-branched $C_3-C_8$ alkyl and A is a group $-N(R_7)R_8$ (IV), in which $R_7$ is hydrogen, $C_1-C_{12}$ alkyl or cyclohexyl and $R_8$ is $C_1-C_4$ alkyl, cyclohexyl or a group of the formula V, in which $R_7$ is as defined above and Q is a group of the formula III, in which $R_1$, $R_2$ and X are as defined above, and n is 1 and $R_9$ is $C_2-C_6$ alkylene, or $R_7$ and $R_8$ together with the carbon atom to which they are attached form a piperidine or morpholine ring, or $R_7$ and $R_8$ together are the radical $-CH_2CH_2-N(Q)-CH_2CH_2-$, in which Q is as defined above.

6. A compound according to claim 1 of the formula I, wherein A is $-N(R_7)R_8$, in which $R_7$ is a piperidin-4- or -1-yl group of the formula

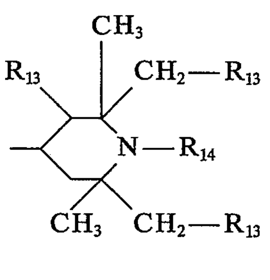 (IX) or 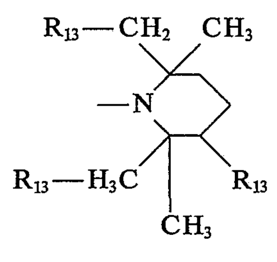 (X)

in which $R_{13}$ is hydrogen or methyl and $R_{14}$ is hydrogen, oxyl, $C_1-C_{18}$ alkyl, $C_3-C_8$ alkenyl, $C_3-C_6$ alkynyl, $C_7-C_{12}$ aralkyl, $C_2-C_{21}$ alkoxyalkyl, an aliphatic acyl group of 1 to 4 carbon atoms or a group $CH_2COOR_{15}$, in which $R_{15}$ is $C_1-C_{12}$ alkyl, $C_3-C_8$ alkenyl, phenyl, $C_7-C_8$ aralkyl or cyclohexyl, and $R_8$ is as defined in claim 2 and the other symbols are as defined in claim 1.

7. A compound according to claim 1 of the formula I, wherein A is $-N(R_7)R_8$, in which each of $R_7$ and $R_8$ is a group of the formula IX, in which $R_{13}$ and $R_{14}$ are as defined in claim 6 and the other symbols are as defined in claim 1.

8. A compound according to claim 6, wherein in the radicals of the formula IX, $R_{13}$ is hydrogen and $R_{14}$ is hydrogen, $C_1-C_8$ alkyl, allyl, benzyl or acetyl.

9. A compound according to claim 8, wherein $R_{13}$ is hydrogen and $R_{14}$ is hydrogen, methyl or acetyl.

10. A compound according to claim 1 of the formula I, wherein $R_1$ and $R_2$ are tert-butyl or

1,1,3,3-tetramethylbutyl and A has the given meaning.

11. A process for the manufacture of a compound of the formula I according to claim 1, which comprises reacting a phosphorous acid diester of the formula

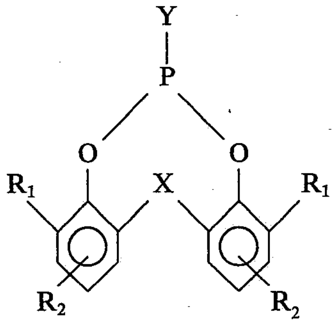

(X)

in which Y is a reactive group and $R_1$, $R_2$ and X are as defined above, with an amine $R_{16}A$, especially with an amine of the formula

$R_{16}N(R_7)R_8$ (XI)

in which $R_{16}$ is hydrogen or a Na, Li or K atom and A, $R_7$ and $R_8$ have the given meanings, or reacting a phosphorous acid amide of the formula

$(Hal)_2-P-A$ (XII)

in which Hal is a halogen atom, especially chlorine, and A has the given meaning, with a diphenol of the formula

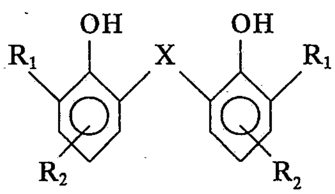

(XIII)

in which $R_1$, $R_2$ and X are as defined above.

12. 6-Morpholino-2,4,8,10-tetra-tert-butyl-12H-dibenz[d,g][1,3,2]dioxaphosphocine according to claim 1.

**Revendications**

1. Composés répondant à la formule (I):

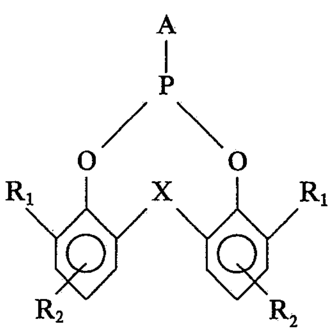

(I)

dans laquelle

$R_1$ représente un alkyle en $C_1-C_{18}$, un cycloalkyle en $C_5-C_{12}$, un phényle ou un phénylalkyle en $C_7-C_9$,

$R_2$ représente l'hydrogène ou un alkyle en $C_1-C_{18}$,

X représente le soufre ou un radical $-CH(R_3)-$ dans lequel $R_3$ représente l'hydrogène ou un radical répondant à la formule (II):

$-CH(R_4)-CH(R_5)SR_6$ (II)

$R_4$ et $R_5$ représentant chacun, indépendamment l'un de l'autre, l'hydrogène ou un alkyle en $C_1-C_{16}$ et $R_6$ représentant un alkyle en $C_1-C_{20}$, le radical alkyle pouvant éventuellement être interrompu par un ou plusieurs atomes de soufre, et

A représente une amine primaire ou secondaire portant des substituants identiques ou différents, aliphatique ou alicyclique, aromatique ou araliphatique, une amine hétérocyclique ou un dérivé de l'hydrazine.

2. Composés de formule (I) selon la revendication 1, dans lesquels A représente un radical $-N(R_7)R_8$ (IV) dans lequel $R_7$ représente l'hydrogène, un alkyle en $C_1-C_{22}$, un oxa- ou thia-alkyle en $C_2-C_{21}$, un alcényle en $C_3-C_{18}$, un alcynyle en $C_3-C_{18}$, un hydroxyalkyle en $C_2-C_6$, un alcoxycarbonylalkyle en $C_3-C_{24}$, un cycloalkyle en $C_5-C_{12}$, un aryle en $C_6-C_{14}$, un alkylaryle en $C_7-C_{15}$, un aralkyle en $C_7-C_{15}$, un radical pipéridyle-4 ou -1 éventuellement substitué et contenant de 5 à 17 atomes de carbone ou un radical de formule (III):

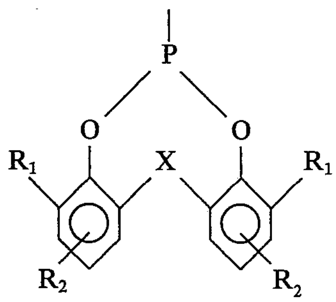

(III)

(dans lequel $R_1$, $R_2$ et X ont les significations précédemment données) et $R_8$ représente un alkyle en $C_1-C_{22}$, un oxa- ou thia-alkyle en $C_2-C_{21}$, un alcényle en $C_3-C_{18}$, un alcynyle en $C_3-C_{18}$, un hydroxyalkyle en $C_2-C_6$, un alcoxycarbonylalkyle en $C_3-C_{24}$, un cycloalkyle en $C_5-C_{12}$, un aryle en $C_6-C_{14}$, un alkylaryle en $C_7-C_{15}$, un aralkyle en $C_7-C_{15}$, un radical pipéridyl-4 ou -1 éventuellement substitué et contenant de 5 à 17 atomes de carbone, ou un radical répondant à l'une des formules:

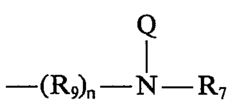

(V)

et

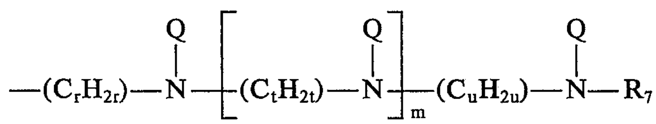

(VI)

dans lesquelles $R_7$ a la signification indiquées ci-dessus, n est égal à 0 ou à 1, $R_9$ représente un alkylène en $C_2$—$C_{22}$ éventuellement interrompu par un ou deux atomes d'oxygène ou de soufre, un alcénylène en $C_4$—$C_{22}$, un alcynylène en $C_4$—$C_{22}$, un cycloalkylène en $C_5$—$C_9$ ou un radical répondant à la formule (VII):

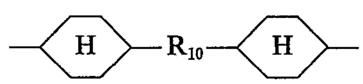

(VII)

dans laquelle $R_{10}$ représente $-O-$, $-S-$ ou un radical $-(R_{11})C(R_{12})-$ dans lequel $R_{11}$ et $R_{12}$ représentent chacun, indépendamment l'un de l'autre, l'hydrogène ou un alkyle en $C_1-C_8$, ou $R_{11}$ et $R_{12}$ forment ensemble et avec l'atome de carbone auquel ils sont liés un cycloalkyle en $C_5-C_{12}$, ou $R_{11}$ et $R_{12}$ forment ensemble un radical cyclohexylène-1,4 diméthylène ou triméthyl-1,3,3-cyclohexylène-1,5, $R_9$ pouvant en outre représenter un radical phénylène, un radical biphénylène ou un radical de formule (VIII):

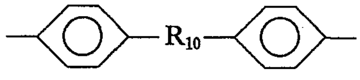

(VIII)

(dans lequel $R_{10}$ a la signification précédemment donnée), r, t et u sont égaux chacun, indépendamment les uns des autres, à 2, à 3, à 4, à 5 ou à 6, m est égal à 0, à 1 ou à 3 et Q représente un radical de formule (III) dans lequel $R_1$, $R_2$ et X ont les significations précédemmment données,

ou $R_7$ et $R_8$ forment ensemble et avec l'atome d'azote auquel ils sont liés un radical de pyrrolidine, d'oxazolidine, de pipéridine ou de morpholine substitué, ou $R_7$ et $R_8$ forment ensemble un radical $-CH_2-CH_2-N(Q)-CH_2-CH_2-$ dans lequel Q a la signification indiquée plus haut.

3. Composés de formule (I) selon la revendication 1, dans lesquels $R_1$ et $R_2$ représentent chacun un alkyle en $C_1-C_{18}$, $R_2$ pouvant en outre représenter l'hydrogène, X représente le soufre ou $-CH_2-$ et A représente un radical $-N(R_7)R_8$ dans lequel $R_7$ représente l'hydrogène, un alkyle en $C_1-C_{18}$, un alcényle en $C_3$ ou $C_4$, un alcynyle en $C_3$ ou $C_4$, un méthoxycarbonylméthyle ou -éthyle, un cycloalkyle en $C_5-C_{12}$, un phényle, un benzyle, un alkylaryle en $C_7-C_{15}$, un radical pipéridyle-4 ou -1 éventuellement substitué et contenant de 5 à 17 atomes de carbone ou un radical de formule (III) dans lequel $R_1$, $R_2$ et X ont les significations précédemment données, et $R_8$ représente un alkyle en $C_1-C_{18}$, un alcényle en $C_3$ ou $C_4$, un alcynyle en $C_3$ ou $C_4$, un méthoxycarbonylméthyle ou -éthyle, un cycloalkyle en $C_5-C_{12}$, un phényle, un benzyle, un alkylaryle en $C_7-C_{15}$, un radical pipéridyle-4 ou -1 éventuellement substitué et contenant de 5 à 17 atomes de carbone, ou un radical de formule (V) ou (VI) dans lequel:
$R_7$ a la signification indiquée ci-dessus, n est égal à 0 ou à 1, $R_9$ représente un alkylène en $C_2-C_9$ éventuellement interrompu par un ou deux atomes d'oxygène ou de soufre, un cyclohexylène ou un radical de formule (VII) dans lequel $R_{10}$ représente $-O-$, $-S-$ ou un radical $-(R_{11})C(R_{12})-$ dans lequel $R_{11}$ et $R_{12}$ représentent chacun, indépendamment l'un de l'autre, l'hydrogène ou un méthyle, ou $R_{11}$ et $R_{12}$ forment ensemble et avec l'atome de carbone auquel ils sont liés un radical cyclohexylène, ou $R_{11}$ et $R_{12}$ forment ensemble un radical cyclohexylène-1,4 diméthylène ou triméthyl-1,3,3 cyclohexylène-1,5, r, t et u sont égaux à 2 ou à 3, m est égal à 0 ou à 1, et Q représente un radical de formule (III) dans lequel $R_1$, $R_2$ et X ont les significations précédemment données,
ou $R_7$ et $R_8$ forment ensemble et avec l'atome d'azote qui les porte un radical de pyrrolidine, d'oxazolidine, de pipéridine ou de morpholine, ou $R_7$ et $R_8$ forment ensemble un radical $-CH_2CH_2-N(Q)-CH_2CH_2-$ dans lequel Q a la signification indiquée plus haut.

4. Composés de formule (I) selon la revendication 1, dans lesquels $R_1$ représente un alkyle en $C_3-C_8$ ramifié en $\alpha$, $R_2$ représente un alkyle en $C_1-C_8$, X représente le soufre ou $-CH_2-$ et A représente un radical $-N(R_7)R_8$ (IV) dans lequel $R_7$ représente l'hydrogène, un alkyle en $C_1-C_{18}$, un allyle, un propargyle, un méthoxycarbonylméthyle, un méthoxycarbonyléthyle ou un cycloalkyle en $C_5-C_8$ et $R_8$ un alkyle en $C_1-C_4$, un allyle, un propargyle, un méthoxycarbonylméthyle, un méthoxycarbonyléthyle, un cycloalkyle en $C_5-C_8$ ou un radical de formule (V) ou (VI) dans lequel:
$R_7$ a la signification précédemment donnée, n est égal à 1, $R_9$ représente un alkylène en $C_2-C_6$, r, t et u sont égaux à 2 ou à 3, m est égal à 0 et Q représente un radical de formule (III) dans lequel $R_1$, $R_2$ et X ont les significations précédemment données,
ou $R_7$ et $R_8$ forment ensemble et avec l'atome de carbone auquel ils sont liés un noyau de pipéridine ou de morpholine, ou $R_7$ et $R_8$ forment ensemble un radical $-CH_2CH_2-N(Q)-CH_2-CH_2-$ dans lequel Q a la signification donnée plus haut.

5. Composés de formule (I) selon la revendication 1, dans lesquels $R_1$ et $R_2$ représentent chacun un alkyle en $C_3-C_8$ ramifié en $\alpha$ et A représente un radical $-N(R_7)R_8$ (IV) dans lequel $R_7$ représente l'hydrogène, un alkyle en $C_1-C_{12}$ ou un cyclohexyle et $R_8$ un alkyle en $C_1-C_4$, un cyclohexyle ou un radical de formule (V) dans lequel $R_7$ a la signification indiquée plus haut et Q représente un radical de formule (III) dans lequel $R_1$, $R_2$ et X ont les siginifications précédemment données, n est égal à 1 et $R_9$ représente un alkylène en $C_2-C_6$, ou $R_7$ et $R_8$ forment ensemble et avec l'atome de carbone auquel ils onst liés un noyau de pipéridine ou de morpholine, ou $R_7$ et $R_8$ forment ensemble un radical $-CH_2CH_2-N(Q)-CH_2CH_2-$ dans lequel Q a la signification indiquée plus haut.

6. Composés de formule (I) selon la revendication 1, dans lesquels A représente un radical $-N(R_7)R_8$ dans lequel $R_7$ représente un radical pipéridyle-4 ou un radical pipéridyle-1 répondant respectivement aux formules (IX) et (X):

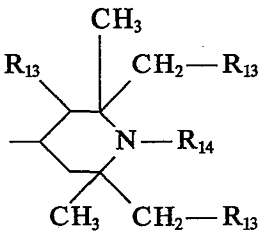
(IX)

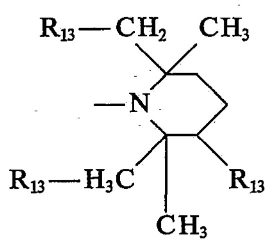
(X)

dans lesquelles $R_{13}$ représente l'hydrogène ou un méthyle et $R_{14}$ l'hydrogène, un oxyle, un alkyle en $C_1-C_{18}$, un alcényle en $C_3-C_8$, un alcynyle en $C_3-C_6$, un aralkyle en $C_7-C_{12}$, un alcoxyalkyle en $C_2-C_{21}$, un radical acyle aliphatique contenant de 1 à 4 atomes de carbone ou un radical $-CH_2COOR_{15}$ dans lequel $R_{15}$ représente un alkyle en $C_1-C_{12}$, un alcényle en $C_3-C_8$, un phényle, un aralkyle en $C_7$ ou $C_8$ ou un cyclohexyle,
et $R_8$ a la signification qui a été donnée à la revendication 2, les autres symboles ayant les significations données à la revendication 1.

7. Composés de formule (I) selon la revendication 1, dans lesquels A représente un radical $-N(R_7)R_8$ dans lequel $R_7$ et $R_8$ représentent chacun un radical de formule (IX) dans lequel $R_{13}$ et $R_{14}$ ont les significations données à la revendication 6, et les autres symboles ont les significations que ont été données à la revendication 1.

8. Composés selon la revendication 6, caractérisés en ce que, dans les radicaux de formule (IX), $R_{13}$ représente l'hydrogène et $R_{14}$ représente l'hydrogène, un alkyle en $C_1-C_8$, un allyle, un benzyle ou un acétyle.

9. Composés selon la revendication 8, dans lesquels $R_{13}$ représente l'hydrogène et $R_{14}$ l'hydrogène, un méthyle ou un acétyle.

10. Composés de formule (I) selon la revendication 1, dans lesquels $R_1$ et $R_2$ représentent chacun un radical tert-butyle ou tétraméthyl-1,1,3,3 butyle et A a la signification donnée.

11. Procédé de préparation de composés de formule (I) selon la revendication 1, caractérisé en ce qu'on fait réagir un diester de l'acide phosphoreux répondant à la formule:

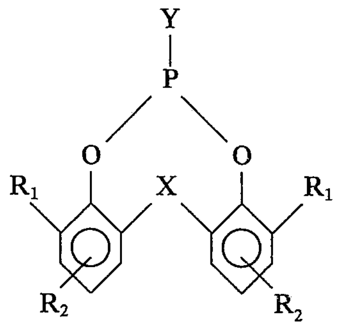

(X)

dans laquelle Y représente un radical réactif et $R_1$, $R_2$ et X ont les significations précédemment données, avec une amine de formule $R_{16}A$, plus particulièrement avec une amine de formule:

$$R_{16}N(R_7)R_8 \quad \text{(XI)}$$

dans lesquelles $R_{16}$ représente l'hydrogène ou un atome Na, Li ou K, et A, $R_7$ et $R_8$ ont les significations précédemment données, ou on fait réagir un amide de l'acide phosphoreux répondant à la formule:

$$(Hal)_2-P-A \quad \text{(XII)}$$

dans laquelle Hal représente un atome d'halogène, plus particulièrement de chlore, et A a la signification donnée, avec un bisphénol répondant à la formule:

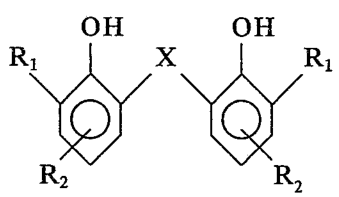

(XIII)

dans laquelle $R_1$, $R_2$ et X ont les significations précédemment données.

12. Composé selon la revendication 1, en l'espèce la morpholino-6 tétrakis-tert-butyl-2,4,8,10 12H-dibenzo[d,g][1,3,2-dioxaphosphocinne].